# EUROPEAN PATENT APPLICATION

(11) **EP 2 347 815 A1**
(43) Date of publication of application: **27.07.2011**
(21) Application number: 10356006.6
(22) Date of filing: 22.01.2010
(51) Int. Cl.: B01D 53/12, B01D 53/81

(54) **Process for reducing the concentration of carbon dioxide in an exhaust gas**

(71) Applicant: Lafarge, 75116 Paris (FR)
(72) Inventor: Gimenez, Michel, 38790 Diemoz (FR); Gartner, Ellis, 69003 Lyon (FR)
(74) Representative: Mérigeault, Shona

(57) **Abstract**

The invention provides a process for reducing the concentration of carbon dioxide in a gas comprising carbon dioxide and water vapour (preferably a flue gas, more preferably a cement plant flue gas) which process comprises contacting the gas with a particulate solid, which solid comprises an alkaline earth metal oxide or hydroxide and an alkanolamine.

## Description

This invention relates to a process for reducing the concentration of carbon dioxide in a carbon dioxide-containing gas.

Many industrial processes, including the manufacture of cement, generate substantial quantities of carbon dioxide which is emitted in flue gases. Carbon dioxide is recognised as a "greenhouse gas" which contributes to global warming. It is therefore desirable to reduce the amount of carbon dioxide released into the atmosphere.

One way of reducing the industrial emission of carbon dioxide is to treat flue gases containing it, before they are released into the atmosphere, in order to trap carbon dioxide. It can, in principle, be trapped as a stable alkaline earth metal carbonate using a solid carbonatable material comprising the alkaline earth metal. However the direct carbonation of such a material using carbon dioxide may be extremely slow at the temperature and pressure of a typical flue gas even though such carbonation is usually thermodynamically favourable. Flue gas generally has a temperature less than about 200°C and a pressure of about one atmosphere, and often also has a high content of water vapour.

In order to capture a significant fraction of cement plant carbon dioxide emissions in a processing unit of a reasonable dimension and cost it is necessary to have an efficient system for removing carbon dioxide. The present invention seeks to provide a process suitable for the removal, at least in part, of the carbon dioxide present in a flue gas by promoting the direct carbonation of a solid carbonatable material. The invention seeks to promote the carbonation by the use of an alkanolamine in association with an alkaline earth metal oxide or hydroxide.

The invention accordingly provides a process for reducing the concentration of carbon dioxide in a gas comprising carbon dioxide and water vapour (preferably a flue gas, more preferably a cement plant flue gas) which process comprises contacting the gas with a particulate solid, which solid comprises an alkaline earth metal oxide or hydroxide and an alkanolamine.

The amount of alkanolamine is generally from 10 to 1000 ppm (by weight), preferably about 100 ppm based on the dry particulate solid.

The alkanolamine preferably has the general formula:

NXₚH₍₃₋ₚ₎ (I)

in which p represents an integer from 1 to 3, preferably 1, and X represents:
a group of the general formula:

   -(CₙH₂ₙ)-OH (II)

   in which n is an integer from 2 to 5, preferably 2, and the grouping -(CₙHₙ)- may be straight-or branched- chain; or
a group of the general formula:

   -(CₘH₂ₘ)-NY_{q}H_{(2-q)} (III)

   in which m is an integer from 2 to 5, Y represents a group of general formula (II) as hereinbefore defined, q is 1 or 2 and the grouping -(CₘH₂ₘ)- may be straight- or branched-chain. A mixture of alkanolamines may be used.
   X preferably represents a group of general formula (II).

The alkanolamine is preferably monoethanolamine (MEA), diethanolamine (DEA) or triethanolamine (TEA), more preferably MEA.

The alkanolamine may be in the form of a free base or a salt thereof, for example an acetate or chloride. Amounts of alkanolamine in this specification, including the accompanying claims, are expressed in terms of the free base.

Solid material used in the process of the invention is preferably ground to form the particulate solid. Grinding generally serves to reduce its particle size; to increase its surface area; to homogenise the material; and/or to adjust the particle size range.

A reduction in particle size is generally associated with an increased specific surface area. A high specific surface area is desirable in order to facilitate reaction of gaseous carbon dioxide with the particulate solid.

The particulate solid may be contacted with the gas to be treated in a packed bed reactor or a fluidised bed reactor. The process of the invention may also be conducted by allowing the particulate solid to fall through a rising stream of the gas. An apparatus similar to that used in the heat exchangers of a cement plant to heat the cement meal before it is introduced into a calciner may be used.

The process is preferably effected by suspending the solid in the gas to be treated, for example in a fluidised bed.

The alkanolamine may be added when the particulate solid is contacted with the gas to be treated. It may be introduced directly into a bed of the particulate solid. More preferably the alkanolamine is added during grinding or blending of the particulate solid prior to its use in the process of the invention. An aqueous solution of the alkanolamine is preferably used. The solution preferably comprises from 0.01 to 50% of alkanolamine. When an alkaline earth metal oxide is present in the particulate solid additional water may be required if the oxide is to be hydrated to the corresponding hydroxide.

Alkanolamines are used in the cement industry as grinding aids to reduce the energy required to grind cement clinker to a given fineness. They serve a similar purpose in grinding the particulate product in the process of the invention. Use of the alkanolamine in this way in the process of the invention also facilitates fluidisation of the ground particulate solid in a fluidised bed.

The gas preferably comprises not more than 50%, preferably 10 to 30% of carbon dioxide. If necessary the gas to be treated may be cooled before contact with the particulate solid. This cooling may be effected, for example, in a heat exchanger.

The alkaline earth metal is preferably magnesium or, more preferably, calcium. Calcium oxide (generally known as the mineral phase "calcia"); calcium hydroxide (generally known as the mineral phase "portlandite"); magnesium oxide (generally known as the mineral phase "periclase"); or magnesium hydroxide (generally known as the mineral phase "brucite") may be used. Anhydrous calcium or magnesium oxides (e.g. calcia or periclase, respectively) in the particulate solid are preferably hydrated, for example by contact with an aqueous liquid, to convert them to the equivalent hydroxides (e.g. portlandite or brucite, respectively) before use in the process of the invention. The aqueous liquid is preferably the aqueous alkanolamine solution referred to above, and the concentration of the alkanolamine in the aqueous solution is preferably adjusted so as to provide sufficient water to hydrate the anhydrous phases in the particulate solid while at the same time providing the desired dosage of alkanolamine by weight of solid, as also referred to above.

The particulate solid preferably comprises from 5% to 100% of free alkaline earth metal oxide or free hydroxide, preferably from 10% to 80%, more preferably 15% to 60%. It will be understood that the particulate solid may comprise a mixture of alkaline earth metal oxides and hydroxides.

The particulate solid is generally coal ash, preferably from lignite combustion or from coal combustion carried out in a fluidised bed; fly ash, preferably Class W fly ash; slag, preferably a steel slag; cement kiln dust; or incinerator waste ash, for example from a municipal incinerator; or a mixture thereof.

The particulate material preferably has a particle size distribution in which 99% of the particles are from 1 to 2000 µm in diameter, more preferably 5 to 600 µm. The minimum particle size is generally about 0.5 µm. The particle size range is preferably limited to minimise loss of fine material from the bed when the rate of gas flow sufficient to suspend the largest particles in the fluidised bed is sufficient to cause a substantial loss of fine particles from the top of the bed. According to a feature of the invention a plurality of fluidised beds, for example 2 to 4, for example 2 or 3, generally arranged in series, may be used to accommodate different particle size ranges.

When a fluidised bed reactor is used it is generally cylindrical, vertically disposed and of substantially constant diameter. The gas to be treated is introduced into the reactor at its base through a distributor which supports the particulate material before introduction of gas. When the pressure of the gas introduced, and consequently its velocity, are low the bed of particles functions as a fixed bed reactor. As the gas pressure and velocity are increased the drag exerted on the particles by the gas increases. When the total drag on the particles in the bed is equal to the weight of the bed incipient or minimum fluidisation occurs and the height of the bed starts to increase. As gas velocity increases the height of the bed (and the volume it occupies) increase with a consequent increase in its porosity. The overall drag then decreases and a new equilibrium is established between drag and the weight of the bed (which remains substantially constant). As the gas velocity increases still further expansion of the bed increases until aggregative or bubbling fluidisation occur. At this point some of the gas forms bubbles which rise through the bed increasing in size as they ascend in the reactor. A further increase in gas velocity results in slug flow and unstable operation of the bed. The process of the invention is preferably carried out in a fluidised bed operating from incipient fluidisation to bubbling fluidisation.

The process of the invention is preferably conducted at a temperature from 5 to 100°C, generally from 15 to 90°C, preferably from 30 to 80°C, more preferably from 50 to 70°C.

The process is generally carried out at a pressure of 1 to 2 bar, generally about 1 bar.

The flue gas in a cement plant comprises water and generally has a dew point of about 50°C: the relative humidity (RH) is therefore 100% at that temperature. The process of the invention is preferably carried out at a temperature slightly higher than the dew point of the gas to be treated, for example from 2 to 20°C higher than the dew point. The relative humidity of the gas in the process of the invention is generally greater than or equal to 40%, preferably greater than or equal to 60%, more preferably greater than or equal to 80%, at the temperature employed in the process. By adjusting the relative humidity of the gas to be treated in association with the use of an alkanolamine the invention seeks to promote further the carbonation of the alkaline earth metal oxide or hydroxide.

The process of the invention may be a batch or continuous process.

In order to avoid emission of fine particulate solids in gas, for example flue gas, treated by the process of the invention the gas may be further treated to remove such solids: known methods for removing fine particulate solids include fabric filters or electrostatic precipitation.

After carbonation in the process of the invention the particulate solid, for example carbonated Class W fly ash, may be used as a cementitious additive to a composite cement or for direct inclusion in a concrete mix. The carbonated particulate solid and its use constitute features of the invention.

The gas to be treated by the process of the invention may also comprise nitrogen oxides and/or sulphur oxides. One secondary benefit of the process of the invention may be the partial removal of these gases by reaction with the material in the bed. However, if necessary, such gaseous oxides may also be removed (at least partially) by known methods prior to contact with the particulate solid.

A preferred method by which nitrogen oxides and/or sulphur oxides may be removed comprises pre-treating, for example in a pre-scrubber, the carbon dioxide-containing gas comprising these gases with an aqueous suspension comprising an alkaline earth metal carbonate. The nitrogen oxides and/or sulphur oxides, if they were not removed prior to contact with the particulate solid, could adversely affect the efficiency of the process of the invention by forming sulphates, sulphites, nitrates and nitrites, consuming alkalinity. Pretreatment with an alkaline earth metal carbonate will form alkaline earth metal sulphates, sulphites, nitrates and nitrites which could potentially be used, for example, as cement additives. The carbon dioxide-containing gas to be treated by the process of the invention may also comprise ash particles which may be removed before treatment, for example by known methods such as fabric filters or electrostatic precipitation.

According to a further feature of the invention there is provided a process for the manufacture of cement which further comprises treating flue gas generated in the manufacture by a process according to the invention as described in this specification including the accompanying claims.

In this specification, including the accompanying claims: percentages of gas are by volume based on dry gas;
other percentages, unless otherwise specified, are by weight;
particle size distribution (between 0.02 µm and 2 mm) is measured using a Malvern MS2000 laser granulometer. Measurement is effected in ethanol. The light source consists of a red He-Ne laser (632 nm) and a blue diode (466 nm). The optical model is that of Mie and the calculation matrix is of the polydisperse type.

The apparatus is checked before each working session by means of a standard sample (Sifraco C10 silica) for which the particle size distribution is known.

Measurements are performed with the following parameters: pump speed 2300rpm and stirrer speed 800rpm. The sample is introduced in order to establish an obscuration between 10 and 20%. Measurement is effected after stabilisation of the obscuration. Ultrasound at 80% is first applied for 1 minute to ensure the de-agglomeration of the sample. After about 30s (for possible air bubbles to clear), a measurement is carried out for 15 s (15000 analysed images). Without emptying the cell, measurement is repeated at least twice to verify the stability of the result and elimination of possible bubbles.

All values given in the description and the specified ranges correspond to average values obtained with ultrasound.

The following non-limiting Example illustrates the invention.

### EXAMPLE

The particulate solid used is a Class W fly ash containing about 16% of free lime from Kardia, Greece. The chemical composition of the fly ash is given in the following Table.

**Table 1**

| | | | |
|---|---|---|---|
| SiO₂ | 28.14% | MgO | 3.68% |
| Al₂O₃ | 11.83% | K₂O | 0.87% |
| Fe₂O₃ | 5.68% | Na₂O | 0.37% |
| CaO | 36.92% | SO₃ | 6.06% |
| Free CaO | 15.76% | | |
| Loss on ignition | 4.96% | | |

The fly ash is treated with 8% by weight of an aqueous solution comprising 0.125% of monoethanolamine, and ground to reduce the particle size and to ensure thorough mixing of the water and MEA throughout the ground material. Free lime is hydrated to calcium hydroxide in this step. The ground material has an average particle size of 15 µm, a minimum particle size of about 0.5 µm and a maximum particle size of about 600 µm. The ground material comprises 100ppm of monoethanolamine.

The presence of portlandite, calcium hydroxide, formed by hydration of the free calcium oxide in the starting material is revealed by X-ray diffraction analysis of the ground fly ash.

The ground material is introduced into the base of a cylindrical fluidised bed reactor which comprises means to monitor the temperature, for example a thermocouple, and a pressure gauge.

Cement plant flue gas is treated in a pre-scrubber with an aqueous suspension of calcium carbonate to reduce or remove any sulphur or nitrogen oxides present. The pre-scrubbed gas is then introduced into the fluidised bed through a base plate and gas distributor. The pressure of the gas introduced is adjusted to achieve fluidisation of the bed of particles. Any particles of small size which escape from the top of the bed are collected in a cyclone separator.

The carbon dioxide content of the treated gas leaving the reactor is monitored. As the carbonation of the alkaline earth metal oxide or hydroxide in the reactor proceeds towards completion the carbon dioxide content in the treated gas starts to rise, indicating the need to replenish the particulate solid in the reactor.

## Claims

1. A process for reducing the concentration of carbon dioxide in a gas comprising carbon dioxide and water vapour which process comprises contacting the gas with a particulate solid, which solid comprises an alkaline earth metal oxide or hydroxide and an alkanolamine.

2. A process according to claim 1 in which the alkanolamine is monoethanolamine.

3. A process according to any one of the preceding claims in which the process is carried out in a fluidised bed.

4. A process according to any one of the preceding claims in which the particulate solid comprises an alkaline earth metal hydroxide.

5. A process according to any one of the preceding claims in which the alkaline earth metal is calcium.

6. A process according to any one of the preceding claims in which the process is conducted at a temperature from 5 to 100°C.

7. A process according to any one of the preceding claims in which the process is conducted at a temperature from 2 to 20°C higher than the dew point of the gas to be treated.

8. A process for the manufacture of cement which further comprises treating flue gas generated during the manufacture by a process according to any one of the preceding claims.

9. A carbonated particulate product obtainable by a process according to any one of the preceding claims.

10. A cement or concrete comprising a carbonated particulate product according to claim 9.
